# EUROPEAN PATENT APPLICATION

(11) **EP 1 443 241 A1**
(43) Date of publication of application: **04.08.2004**
(21) Application number: 03798469.7
(22) Date of filing: 24.09.2003
(51) Int. Cl.: F16G 5/06

(54) **FRICTION TRANSMISSION BELT**

(30) Priority: 27.09.2002 JP 2002283332; 05.06.2003 JP 2003160220
(71) Applicant: BANDO CHEMICAL INDUSTRIES, LTD., Kobe-shi, Hyogo 652-0883 (JP)
(72) Inventor: HAYASHI, Takehiro Bando Chemical Industries, Ltd., Hyogo-ku, Kobe-shi Hyogo 652-0883 (JP)
(74) Representative: Zinnecker, Armin, Dipl.-Ing.
(86) International application number: PCT/JP2003/012180
(87) International publication number: WO 2004/029477

(57) **Abstract**

In a frictional forced power transmission belt **A** whose back face is reinforced with a short fiber-containing rubber (**12**) into which short fibers oriented in a single direction are mixed, the short fiber-containing rubber (**12**) is provided integrally with the back face of the belt so that the direction of orientation of the short fibers forms an angle with respect to the widthwise direction of the belt.

## Description

### TECHNICAL FIELD

The present invention relates to frictional forced power transmission belts.

### BACKGROUND ART

In automobiles, V-ribbed belts are widely used to drive accessories such as fans, air conditioners, alternators and power steering.

Japanese Unexamined Patent Publication No. 10-9344 discloses a related V-ribbed belt in which a plain weave fabric made of cotton fibers and synthetic fibers is stuck to the back face of the belt so that the center line of an angle between warp and weft yarns extends obliquely with respect to the longitudinal direction of the belt without performing any wide-angle process at all. This publication describes that such an arrangement provides, without performing any wide-angle process on the back face fabric, the resistance of the belt to longitudinal splits which is equivalent to that of the belt subjected to a wide-angle process.

Actually, implementation of a serpentine system for driving a plurality of accessories by using a single frictional forced power transmission belt has been developed in recent years. Furthermore, in such a serpentine accessory drive system, a distance between pulleys has been narrowed, and the span length of a belt between the pulleys has been shortened due to the effect of a reduction in space for an engine room.

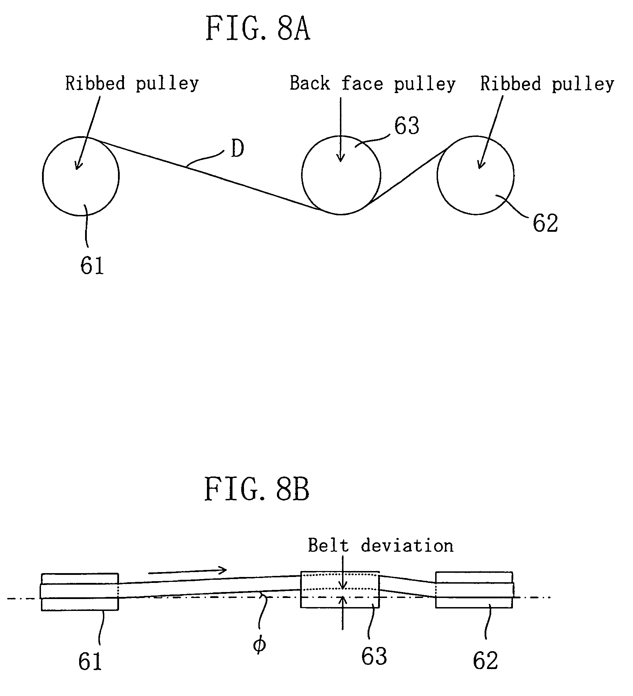

On the other hand, a serpentine accessory drive system generally utilizes an auto-tensioner formed to allow a tensioner pulley to press the back face of a belt so that the tension of the belt is kept constant. However, as shown in FIGS. **8A** and **8B**, in some cases, there occurs a so-called "belt deviation" in which side tracking of a belt **D** occurs in the widthwise direction of the belt on a tensioner pulley **63** that is a flat pulley provided between a pair of ribbed pulleys **61**, **62**. Then, if the span length of the belt is shortened as described above, this belt deviation increases an alignment angle formed by the belt-running direction and the direction perpendicular to a pulley axis, thus causing the problem that noise is produced.

### DISCLOSURE OF INVENTION

The present inventors found that factors lying outside a belt, such as deviation in alignment of pulleys in front and in rear, deviation in alignment of a tensioner pulley, shape of each pulley and wobbling of a bearing, are involved with factors lying within the belt, such as a tendency of the belt to cause side tracking, which results in belt deviation. Furthermore, the present inventors also found that among these factors, the deviation in alignment of a tensioner pulley is caused by its inclination that occurs with the elapse of time, and this deviation is deeply involved with belt deviation.

An object of the present invention is to provide a frictional forced power transmission belt capable of correcting belt deviation caused by external factors.

In order to achieve the above object, the present invention allows the frictional forced power transmission belt to have a tendency to cause side tracking in the widthwise direction of the belt so as to offset belt deviation resulting from external factors.

To be more specific, a frictional forced power transmission belt of the present invention is based on the premise that the back face of the belt is reinforced with a short fiber-containing rubber into which short fibers oriented in a single direction are mixed. Furthermore, the belt is characterized in that the short fiber-containing rubber is provided integrally with the back face of the belt so that the direction of orientation of the short fibers forms an angle with respect to the widthwise direction of the belt.

According to the above-described embodiment, the belt has a tendency to run toward the direction of orientation of the short fibers in the short fiber-containing rubber, and thus side tracking of the belt tends to occur when the belt runs; therefore, the side tracking of the belt can offset and correct the belt deviation caused by external factors.

In the present invention, the direction of orientation of the short fibers in the short fiber-containing rubber preferably forms an angle of not less than 10º nor more than 45º with respect to the widthwise direction of the belt. This is because such an embodiment can effectively suppress belt deviation. That is, if this angle is smaller than 10º, the effect of correcting belt deviation might be lessened, and if this angle is greater than 45º, the tendency of the belt itself to cause side tracking is increased such that the effect of correcting belt deviation might be excessively heightened. From this viewpoint, as described in the aftermentioned embodiments, this angle is more preferably not less than 10º nor more than 30º.

Although an improvement in a cord embedded in the frictional forced power transmission belt can also forcibly provide the belt with a tendency to cause side tracking, the strength and elongation characteristic of the belt, for example, are considerably affected if the number of twist for the cord is optimized. Furthermore, if the spiral pitches of the cord provided spirally within the belt are constant, the spiral angle varies depending on the length of the belt; therefore, respective cord materials have to be prepared for various belts in order to provide each of the various belts with a certain tendency to cause side tracking, which increases the cost accordingly. To the contrary, according to the present invention, it is sufficient to prepare a single short fiber-containing rubber and to change the setting of the direction in which warp yarns in a cord fabric are extended, or the direction of orientation of the short fibers in the short fiber-containing unvulcanized rubber for each of the various belts, and therefore, the necessity of preparation of respective materials as in the improvement of the cord is obviated, thus suppressing a cost increase accordingly.

In the frictional forced power transmission belt of the present invention, a belt body may be a V-ribbed belt body.

The frictional forced power transmission belt of the present invention is suitable to drive accessories of an automobile.

### BRIEF DESCRIPTION OF THE DRAWINGS

FIG. **1** is an oblique view of a V-ribbed belt **A** according to an embodiment of the present invention.
FIG. **2** is a diagram illustrating the layout of a serpentine accessory drive system with the V-ribbed belt **A** according to the embodiment of the present invention wound around the system.
FIG. **3** is a diagram illustrating how the V-ribbed belt **A** according to the embodiment of the present invention is wound around a pulley.
FIG. **4** is an oblique view of a V-ribbed belt **B** according to a reference example.
FIG. **5** is a diagram illustrating how the V-ribbed belt **B** according to the reference example is wound around a pulley.
FIG. **6** is a diagram illustrating the layout of a tester for evaluating belt durability.
FIG. **7** is a graph showing the relationship between an angle that the direction of orientation of short fibers forms with respect to the widthwise direction of the belt, and belt deviation.
FIGS. **8A** and **8B** are diagrams each illustrating belt deviation that occurs in a V-ribbed belt on a tensioner pulley.

### BEST MODE FOR CARRYING OUT THE INVENTION

Hereinafter, an embodiment of the present invention will be described in detail with reference to the drawings.

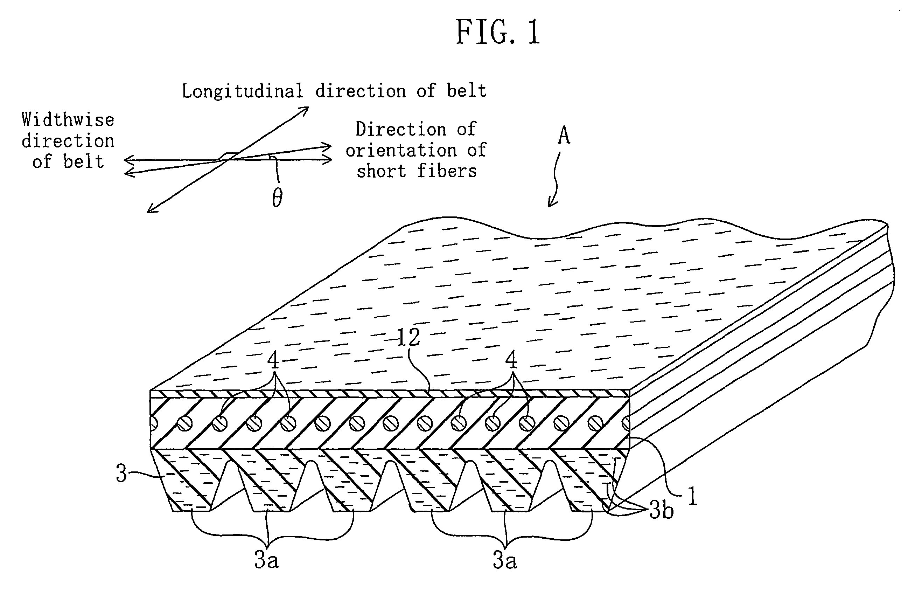

FIG. **1** illustrates a V-ribbed belt **A** according to the embodiment of the present invention.

This V-ribbed belt **A** whose belt body is formed by a V-ribbed belt body includes: an adhesion rubber layer **1**; a back face rubber layer **12** provided integrally with the topside of the adhesion rubber layer **1**, i.e., the back face of the belt; a rib rubber layer **3** provided integrally with the backside of the adhesion rubber layer **1**, i.e., an inner part of the belt; and a cord **4** embedded spirally in the center of the belt thickness direction of the adhesion rubber layer **1** so as to extend in an approximate belt longitudinal direction and at certain pitches in the belt widthwise direction.

The adhesion rubber layer **1** is formed into a plate band shape extending in the belt longitudinal direction, and is made of a rubber composition such as a chloroprene rubber (CR), an ethylene-propylene-diene monomer (EPDM) or a hydrogenated nitrile rubber (H-NBR). This adhesion rubber layer **1** serves as a rubber layer that forms a portion of the belt body and holds the cord **4**.

The back face rubber layer **12** is made of a rubber composition such as a chloroprene rubber (CR), an ethylene-propylene-diene monomer (EPDM) or a hydrogenated nitrile rubber (H-NBR), and short fibers **12a, 12a,** ··· such as nylon fibers and/or aramid fibers oriented in a single direction are mixed into the back face rubber layer **12**. Further, the direction of orientation of the short fibers **12a** in this back face rubber layer **12** forms an angle of not less than 10º nor more than 45º (preferably, an angle of not less than 10º nor more than 30º) with respect to the belt widthwise direction. This back face rubber layer **12** contributes to power transmission when the belt runs with the back face thereof wound around a flat pulley.

The rib rubber layer **3** is made of a rubber composition such as a chloroprene rubber (CR), an ethylene-propylene-diene monomer (EPDM) or a hydrogenated nitrile rubber (H-NBR) like the adhesion rubber layer **1,** and short fibers **3b, 3b,** ··· such as nylon fibers and/or aramid fibers oriented in the belt widthwise direction are mixed into the rib rubber layer **3** so as to improve the modulus of elasticity in the belt widthwise direction. The rib rubber layer **3** at the inner part of the belt is provided with protrusively formed six ribs **3a**, **3a**, ··· that are extended in the belt longitudinal direction, and are provided at certain pitches in the belt widthwise direction. This rib rubber layer **3** plays the principal role in power transmission when the belt wound around a ribbed pulley runs.

The cord **4** is formed of a twisted yarn that is made of polyethylene terephthalate (PET) fibers, polyethylene naphthalate (PEN) fibers or polyvinyl alcohol (PVA) fibers, for example, and that is subjected to an adhesion process using a resorcinol-formaldehyde-latex (RFL) solution or the like and a process for drawing and heating the yarn prior to molding of the belt. This cord **4** serves to impart strength and tensile strength to the belt **A**.

The V-ribbed belt **A** can be fabricated by a known belt fabrication method using, instead of a fabric for reinforcing the back face of a belt, a rubber sheet containing unvulcanized short fibers.

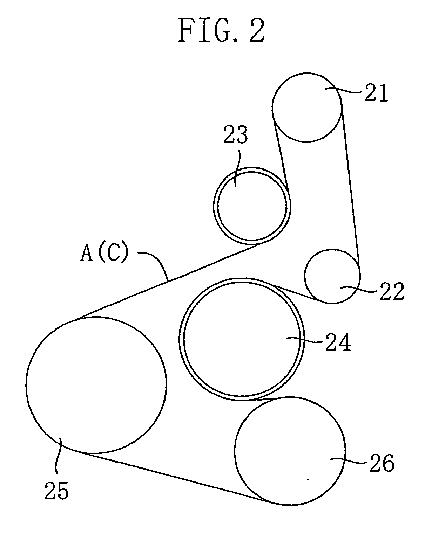

FIG. **2** illustrates the layout of pulleys used in a serpentine accessory drive system for an automotive engine in which the V-ribbed belt **A** is provided.

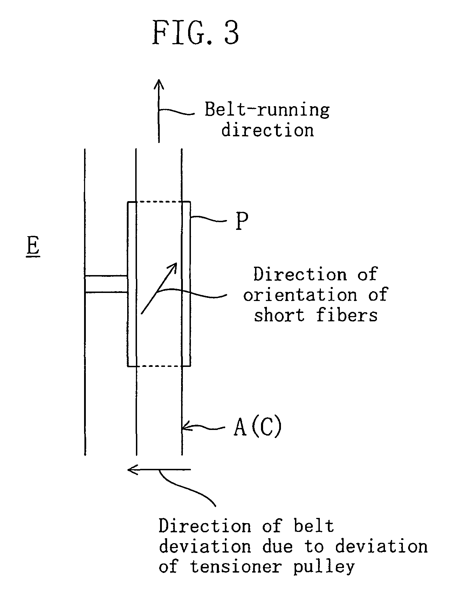

The layout of the pulleys used in the serpentine accessory drive system includes: a power steering pulley **21** located at an uppermost position; an AC generator pulley **22** located below the power steering pulley **21**; a tensioner pulley **23** located to the lower left of the power steering pulley **21**; a water pump pulley **24** located below the tensioner pulley **23**; a crank shaft pulley **25** located to the lower left of the tensioner pulley **23**; and an air conditioner pulley **26** located to the lower right of the crank shaft pulley **25**. Among these pulleys, those other than the tensioner pulley **23** and the water pump pulley **24**, which are flat pulleys, are all ribbed pulleys. Further, the V-ribbed belt **A** is wound around the power steering pulley **21** so that a ribbed part of the belt makes contact therewith, and is then wound around the tensioner pulley **23** so that the belt back face makes contact therewith. Thereafter, the V-ribbed belt **A** is sequentially wound around the crank shaft pulley **25** and the air conditioner pulley **26** so that the ribbed part makes contact therewith, is further wound around the water pump pulley **24** so that the belt back face makes contact therewith, is then wound around the AC generator pulley **22** so that the ribbed part makes contact therewith, and is finally returns to the power steering pulley **21**. Furthermore, as shown in FIG. **3**, the V-ribbed belt **A** is wound around a pulley **P** so that the short fibers **12a** in the back face rubber layer **12** are oriented in the direction inclined from an engine **E** toward the opposite side along the belt-running direction. This V-ribbed belt **A** is driven by the crank shaft pulley **25** so as to run in a clockwise direction, thus driving an accessory pulley, e.g., the power steering pulley **21**. Meanwhile, in this automotive engine, the alignment of the tensioner pulley **23** is deviated due to its inclination that occurs with the elapse of time, thus causing deviation of the V-ribbed belt **A** toward the engine as shown in FIG. **3**.

The V-ribbed belt **A** formed as described above has a tendency to run toward the direction of orientation of the short fibers **12a** in the back face rubber layer **12** when the belt **A** runs, and thus side tracking of the belt **A** tends to occur when it runs. Therefore, the belt **A** is wound around the pulleys **21** through **26** so that side tracking of the belt **A** occurs in the direction opposite to the direction in which belt deviation occurs due to an external factor such as deviation in alignment of the tensioner pulley **23** as described above. Accordingly, it becomes possible to offset and correct the belt deviation resulting from the external factor by utilizing the side tracking of the belt A, and thus it becomes possible to suppress the generation of noise.

Although an improvement in the cord **4** can also forcibly provide the belt **A** with a tendency to cause side tracking, the strength and elongation characteristic of the belt, for example, are considerably affected if the number of twist for the cord **4** is optimized. Furthermore, if the spiral pitches of the cord provided spirally within the belt are constant, the spiral angle varies depending on the length of the belt; therefore, respective cord materials have to be prepared for various belts in order to provide each of the various belts with a certain tendency to cause side tracking, which increases the cost accordingly. To the contrary, if the belt is formed as described above, it is sufficient to prepare a single unvulcanized back face rubber sheet and to change the setting of the direction of orientation of the short fibers **12a** for each of the various belts, and therefore, the necessity of preparation of respective materials as in the improvement of the cord **4** is obviated, thus suppressing a cost increase accordingly.

It should be noted that although the frictional forced power transmission belt of the above-described embodiment has been described as the V-ribbed belt **A**, the present invention is not limited to this in particular, but may be applicable to other kinds of frictional forced power transmission belts such as V-belts.

### -Reference Example-

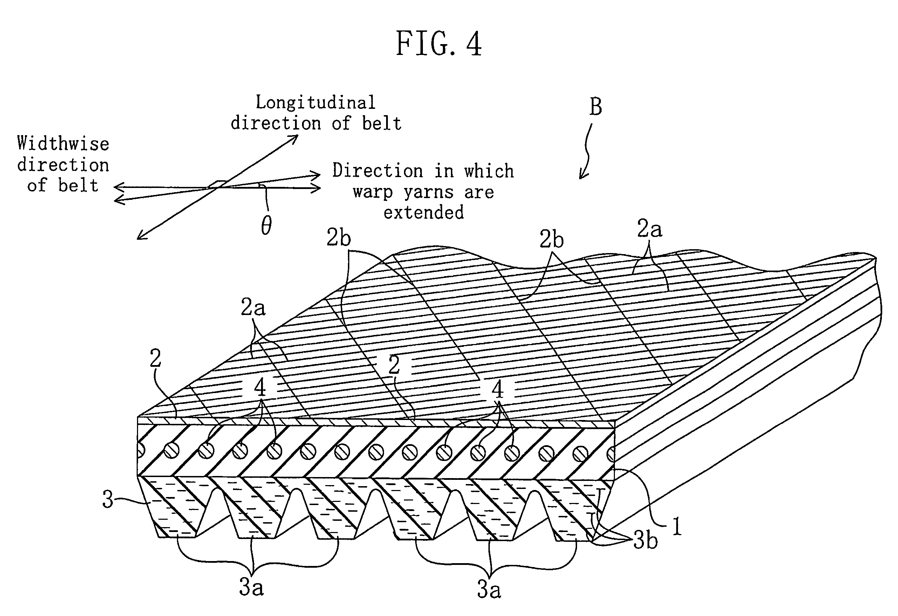

FIG. **4** illustrates a V-ribbed belt **B** according to a reference example. It should be noted that the same components as those in the first embodiment are identified by the same reference characters.

This V-ribbed belt **B** includes: an adhesion rubber layer **1**; a back face reinforcement fabric **2** stuck to the topside of the adhesion rubber layer **1**, i.e., the belt back face, so as to be provided integrally therewith; a rib rubber layer **3** provided integrally with the backside of the adhesion rubber layer **1**, i.e., an inner part of the belt; and a cord **4** provided spirally in the center of the belt thickness direction of the adhesion rubber layer **1** so as to extend in an approximate belt longitudinal direction and at certain pitches in the belt widthwise direction.

The back face reinforcement fabric **2** is formed of a cord fabric that is made of warp yarns **2a** and weft yarns **2b** such as nylon and/or cotton, and that is subjected to an adhesion process using a rubber cement obtained by dissolving rubber in a solvent. In the cord fabric, the warp yarns **2a** are relatively thick and the count thereof is high, while the weft yarns **2b** are relatively thin to a degree that the warp yarns **2a** are not disturbed and the count thereof is low. In addition, in the cord fabric constituting the back face reinforcement fabric **2,** the direction, in which the warp yarns **2a** are extended, forms an angle of not less than 10º nor more than 45º with respect to the belt widthwise direction. This back face reinforcement fabric **2** contributes to power transmission when the belt runs with the back face thereof wound around a flat pulley.

Other arrangements are similar to the aforementioned embodiment.

The V-ribbed belt **B** can be fabricated by a known belt fabrication method.

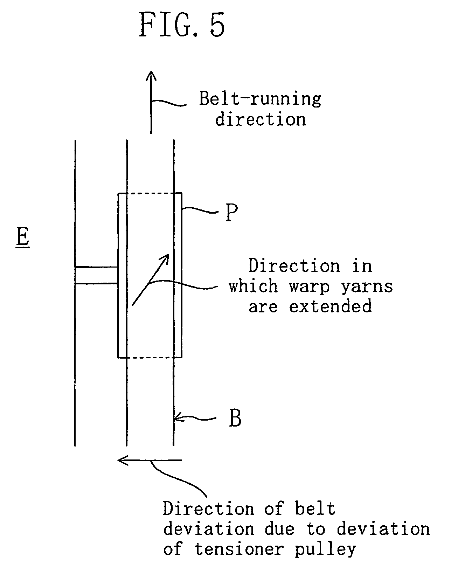

Further, if the V-ribbed belt **B** is wound around the pulleys in the layout of the serpentine accessory drive system as shown in FIG. **2**, the V-ribbed belt **B** is wound around a pulley **P** so that the warp yarns **2a** of the cord fabric in the back face reinforcement fabric **2** provided on the belt back face are extended in the direction inclined from an engine **E** toward the opposite side along the belt-running direction as shown in FIG. **5**.

The V-ribbed belt **B** formed as described above has a tendency to run toward the direction in which the warp yarns **2a** of the cord fabric are extended when the belt **B** runs, and thus side tracking of the belt **B** tends to occur when it runs. Therefore, the belt **B** is wound around the pulley so that the side tracking of the belt **B** occurs in the direction opposite to the direction in which belt deviation occurs due to an external factor such as deviation in alignment of the tensioner pulley. Accordingly, it becomes possible to offset and correct the belt deviation resulting from the external factor by utilizing the side tracking of the belt **B**, and thus it becomes possible to suppress the generation of noise.

Besides, since it is sufficient to prepare a single cord fabric and to change the setting of the direction, in which the warp yarns **2a** of the cord fabric are extended, for each of various belts, the necessity of preparation of respective materials as in the improvement of the cord 4 is obviated, and thus a cost increase can be suppressed accordingly.

### -Test and Evaluation-

### (Belt for Test and Evaluation)

As a belt for test and evaluation, the following exemplary V-ribbed belts are prepared. In the following description, we consider an angle that the direction, in which the bisector of belt-widthwise-directed angles between warp and weft yarns in a reinforcement fabric is extended, forms with respect to the belt widthwise direction, and an angle that the direction of orientation of short fibers forms with respect to the belt widthwise direction. When the back face of the belt is viewed from the front, the bisector or the direction of orientation of the short fibers forms positive and negative angles in counterclockwise and clockwise directions with respect to the belt widthwise direction, respectively.

### <Example 1>

A V-ribbed belt according to Example 1 is provided at its back face with a plain weave reinforcement fabric so that an angle è that the direction, in which the bisector of intersecting angles of warp and weft yarns orthogonal to each other is extended, forms with respect to the belt widthwise direction is 0º, i.e., so that the direction of the bisector of the intersecting angles corresponds to the belt widthwise direction. The V-ribbed belt according to Example 1 does not have a tendency to cause side tracking in the belt widthwise direction. It should be noted that the number of ribs is three, and the length of the belt is 900 mm.

### <Example 2>

A V-ribbed belt according to Example 2 is formed in the same way as in Example 1, except the belt back face is provided with a plain weave reinforcement fabric so that an angle è that the direction, in which the bisector of intersecting angles of warp and weft yarns orthogonal to each other is extended, forms with respect to the belt widthwise direction is - 10º. The V-ribbed belt according to Example 2 has a tendency to cause side tracking in the direction of the bisector of the intersecting angles of the warp and weft yarns.

### <Example 3>

A V-ribbed belt according to Example 3 is provided at its back face with a short fiber-containing back face rubber layer so that an angle è that the direction of orientation of short fibers forms with respect to the belt widthwise direction is 0º, i.e., so that the direction of orientation of the short fibers corresponds to the belt widthwise direction. The V-ribbed belt according to Example 3 does not have a tendency to cause side tracking in the belt widthwise direction. It should be noted that the number of ribs is three, and the belt length is 900 mm.

### <Example 4>

A V-ribbed belt according to Example 4 is formed in the same way as in Example 3, except the belt back face is provided with a short fiber-containing back face rubber layer so that an angle è that the direction of orientation of short fibers forms with respect to the belt widthwise direction is 10º. The V-ribbed belt according to Example 4 has a tendency to cause side tracking in the direction of orientation of the short fibers.

### <Example 5>

A V-ribbed belt according to Example 5 is formed in the same way as in Example 3, except the belt back face is provided with a short fiber-containing back face rubber layer so that an angle è that the direction of orientation of short fibers forms with respect to the belt widthwise direction is 20º. The V-ribbed belt according to Example 5 has a tendency to cause side tracking in the direction of orientation of the short fibers.

### <Example 6>

A V-ribbed belt according to Example 6 is formed in the same way as in Example 3, except the belt back face is provided with a short fiber-containing back face rubber layer so that an angle è that the direction of orientation of short fibers forms with respect to the belt widthwise direction is 30º. The V-ribbed belt according to Example 6 has a tendency to cause side tracking in the direction of orientation of the short fibers.

### <Example 7>

A V-ribbed belt according to Example 7 is formed in the same way as in Example 3, except the belt back face is provided with a short fiber-containing back face rubber layer so that an angle è that the direction of orientation of short fibers forms with respect to the belt widthwise direction is 40º. The V-ribbed belt according to Example 7 has a tendency to cause side tracking in the direction of orientation of the short fibers.

### (Method for Test and Evaluation)

### <Belt Deviation>

Belt deviation in a V-ribbed belt C according to each of Examples 1 through 7 is tested and evaluated by using an automotive engine having the layout of the serpentine accessory drive system shown in FIG. **2**. In this automotive engine, deviation in alignment of the tensioner pulley **23** is caused by its inclination that occurs with the elapse of time, thus exerting an action that causes belt deviation toward the engine (i.e., toward the background of FIG. **2**).

The V-ribbed belts **C** according to Examples 1 through 7 are each wound around the pulleys **21** through **26** and allowed to run in a clockwise direction so that belt deviation on the tensioner pulley **23** is measured. It should be noted that the belt deviation toward the engine (i.e., toward the background of FIG. **2**) is represented by " + ", and the belt deviation toward the opposite direction (i.e., toward the foreground of FIG. **2**) is represented by " - ". In this method, the belt **C** according to Example 2 is wound around the pulleys so that the bisector of the intersecting angles of the warp and weft yarns in the back face reinforcement fabric extends in the direction inclined toward the engine along the belt-running direction. On the other hand, as shown in FIG. **3**, the belts **C** according to Examples 3 through 7 are each wound around the pulleys so that the direction of orientation of the short fibers in the back face rubber layer corresponds to the direction inclined from the engine **E** toward the opposite side along the belt-running direction.

### <Durability of Belt>

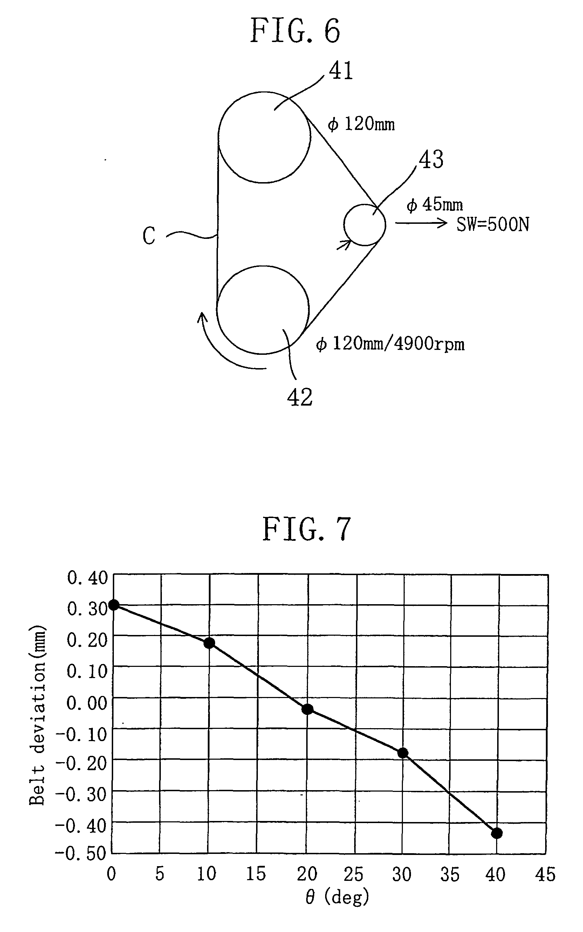

The durability of each of the V-ribbed belts **C** according to Examples 1 though 7 is tested and evaluated by using a tester for evaluating belt durability shown in FIG. **6**. This tester for evaluating belt durability includes: large-diameter ribbed pulleys **41, 42** each having a pulley diameter of 120 mm, one located above the other; and a small-diameter ribbed pulley **43** having a pulley diameter of 45 mm, which is located to the right of the midpoint position between the ribbed pulleys **41, 42** located one above the other.

The V-ribbed belts **C** according to Examples 1 through 7 are each wound around the three ribbed pulleys **41, 42** and **43** so that the ribbed part of each belt **C** makes contact therewith, tension is given to each belt **C** by laterally loading a set weight of 500 N on the small-diameter ribbed pulley **43**, and each belt **C** is allowed to run in a clockwise direction for 1000 hours with the lower ribbed pulley **42** rotated at 4900 rpm. Then, we observed damaged condition of the back face of each belt **C**.

### (Test and Evaluation Results)

Both test and evaluation results are shown in Table 1. Furthermore, FIG. **7** shows the relationship between the angle è that the direction of orientation of the short fibers forms with respect to the belt widthwise direction, and the belt deviation in Examples 3 through 7.

**Table 1**

| | Belt back face reinforcement member | è (º ) | Belt deviation (mm) | Longitudinal split in belt |
|---|---|---|---|---|
| Example 1 | Back face reinforcement fabric | 0 | 0.35 | Not found |
| Example 2 | Back face reinforcement fabric | -10 | 0.12 | Found |
| Example 3 | Short fiber-containing rubber layer | 0 | 0.30 | Not found |
| Example 4 | Short fiber-containing rubber layer | 10 | 0.16 | Not found |
| Example 5 | Short fiber-containing rubber layer | 20 | - 0.04 | Not found |
| Example 6 | Short fiber-containing rubber layer | 30 | - 0.18 | Not found |
| Example 7 | Short fiber-containing rubber layer | 40 | - 0.44 | Not found |

According to Table 1, the belt deviations in Examples 1 and 3, in which each belt does not have a tendency to cause side tracking in the belt widthwise direction, are 0.35 mm and 0.30 mm, respectively. This is believed to be due to the fact that deviation in alignment of the tensioner pulley **23** occurs, thus exerting an action which causes belt deviation toward the engine (i.e., toward the background of FIG. **2**).

Furthermore, it can be understood that the belts according to Example 2 and Examples 4 through 7, each having a tendency to cause side tracking in the belt widthwise direction, correct the belt deviation in Examples 1 and 3. This is believed to be due to the fact that these belts **C** each have a tendency to run toward the direction of orientation of the short fibers in the back face rubber layer, and thus side tracking of the belt **C** tends to occur when it runs, and therefore, the side tracking of the belt **C** offsets the belt deviation resulting from deviation in alignment of the tensioner pulley **23** by winding the belt **C** around the pulleys **21** through **26** so that the side tracking of the belt **C** occurs in the direction opposite to the direction in which the belt deviation occurs due to the deviation in alignment of the tensioner pulley **23**.

According to FIG. 7, if the angle that the direction of orientation of the short fibers forms with respect to the belt widthwise direction is not less than 0º nor more than 18º, the belt deviation becomes smaller with an increase in this angle. On the other hand, it can be seen that if the angle is greater than 18º, the belt deviation in the opposite direction becomes greater with an increase in this angle. This is believed to be due to an inequality between the belt deviation action caused by deviation in alignment of the tensioner pulley **23**, and the side tracking action of the belt **C**. That is, although the total belt deviation appears as the sum of both the actions, if the former is greater than the latter, the belt deviation is " + ", and if the former is smaller than the latter, the belt deviation is "-". Therefore, if belt deviation actions caused by deviation in alignment of the tensioner pulley **23** are substantially identical irrespective of the types of the engines, the absolute value of belt deviation can be suppressed within 0.20 mm by setting the angle that the direction of orientation of the short fibers forms with respect to the belt widthwise direction at not less than 10º nor more than 30º. Besides, by setting this angle at not less than 15º nor more than 25º, the absolute value of belt deviation can be suppressed within about 0.10 mm.

According to Table 1, damage caused by a longitudinal split in the belt back face is observed only in Example 2. This is believed to be due to the fact that although any direction, in which the warp and weft yarns in the reinforcement fabric are extended, forms the same angle with respect to the belt widthwise direction in Example 1, the direction, in which the bisector of the intersecting angles of the warp and weft yarns are extended, forms an angle of - 10º with respect to the belt widthwise direction in Example 2, and therefore, the direction in which any of the yarns is extended approximately corresponds to the belt widthwise direction so that the resistance of the belt to longitudinal splits is degraded. It should be noted that since no damage is observed in Examples 3 through 7 in which the belt back face is reinforced with the short fiber-containing rubber, a sufficient reinforcing effect is thought to be achieved irrespective of how the rubber is provided on the belt back face.

### INDUSTRIAL APPLICABILITY

As described above, the present invention is useful to frictional forced power transmission belts.

## Claims

1. A frictional forced power transmission belt whose back face is reinforced with a short fiber-containing rubber into which short fibers oriented in a single direction are mixed,
wherein the short fiber-containing rubber is provided integrally with the back face of the belt so that the direction of orientation of the short fibers forms an angle with respect to the widthwise direction of the belt.

2. The frictional forced power transmission belt according to Claim 1,
wherein the direction of orientation of the short fibers in the short fiber-containing rubber forms an angle of not less than 10º nor more than 45º with respect to the widthwise direction of the belt.

3. The frictional forced power transmission belt according to Claim 2,
wherein the direction of orientation of the short fibers in the short fiber-containing rubber forms an angle of not less than 10º nor more than 30º with respect to the widthwise direction of the belt.

4. The frictional forced power transmission belt according to Claim 1,
wherein a belt body is a V-ribbed belt body.

5. The frictional forced power transmission belt according to Claim 1,
wherein the belt is used to drive accessories of an automobile.
